# EUROPEAN PATENT SPECIFICATION

(11) **EP 3 188 863 B1**
(45) Date of publication and mention of the grant of the patent: **19.01.2022**
(21) Application number: 15838532.8
(22) Date of filing: 04.09.2015
(51) Int. Cl.: B23B 29/12, B23B 31/30, B23B 31/08, B23Q 11/10, B23B 31/117, B23B 31/02, B23B 37/00, B23B 31/20

(54) **TOOL ATTACHMENT AND THROUGH SPINDLE COOLANT SYSTEMS FOR USE WITH ULTRASONIC MACHINING MODULES**
WERKZEUGANBAUGERÄT UND SYSTEME FÜR KÜHLMITTEL DURCH DIE SPINDEL ZUR VERWENDUNG MIT ULTRASCHALLBEARBEITUNGSMODULEN
FIXATION D'OUTIL ET SYSTÈMES DE REFROIDISSEMENT PAR BROCHE DESTINÉS À ÊTRE UTILISÉS AVEC DES MODULES D'USINAGE PAR ULTRASONS

(30) Priority: 05.09.2014 US 201462046365 P
(43) Date of publication of application: 12.07.2017
(73) Proprietor: Edison Welding Institute, Inc., Columbus, OH 43221 (US)
(72) Inventor: SHORT, Matthew, A., Wilmington, OH 45177 (US); HAY, Jacob, Circleville, OH 43113 (US)
(74) Representative: Mewburn Ellis LLP
(86) International application number: PCT/US2015/048522
(87) International publication number: WO 2016/037046

(56) References cited:
- DE-A1- 10 360 918
- US-A- 4 423 880
- US-A- 4 423 880
- US-A- 4 964 764
- US-A1- 2001 020 808
- US-A1- 2006 128 283
- US-A1- 2008 277 886
- US-A1- 2011 155 407
- US-A1- 2011 222 975
- US-A1- 2011 222 975
- US-A1- 2013 028 675
- US-B1- 6 348 003

## Description

### BACKGROUND OF THE INVENTION

The described invention relates generally to systems for machining metals and other materials and more specifically to a system for machining metals and other materials into which an ultrasonic machining module has been incorporated, wherein the ultrasonic machining module is compatible with a variety of existing machining systems, devices, and processes due to its vibration-isolating characteristics.

Machining, which is a collective term for drilling, milling, reaming, tapping, and turning, is an enabling technology that impacts virtually all aspects of manufacturing in the United States and elsewhere in the world. In a specific example, a milling machine is a machining tool used to machine solid materials. Milling machines are typically classified as either horizontal or vertical, which refers to the orientation of the main spindle. Both types range in size from small, bench-mounted devices to much larger machines suitable for industrial purposes. Unlike a drill press, which holds the workpiece stationary as the drill moves axially to penetrate the material, milling machines move the workpiece axially and radially against the rotating milling cutter, which cuts on its sides as well as its tip. Milling machines are used to perform a vast number of operations, from simple tasks (e.g., slot and keyway cutting, planing, drilling) to complex tasks (e.g., contouring, diesinking).

Cutting and drilling tools and accessories used with machining systems (including milling machines) are often referred to in the aggregate as "tooling". Milling machines often use CAT or HSK tooling. CAT tooling, sometimes called V-Flange tooling, is the oldest and probably most common type used in the United States. CAT tooling was invented by Caterpillar Inc. of Peoria, Illinois, to standardize the tooling used on Caterpillar machinery. HSK tooling, sometimes called "hollow shank tooling", is much more common in Europe where it was invented than it is in the United States. The holding mechanism for HSK tooling is placed within the hollow body of the tool and, as spindle speed increases, it expands, gripping the tool more tightly with increasing spindle speed.

Improving the machinability of certain materials is of significant interest to manufacturers of military equipment and certain commercial hardware, as well as to the builders of machine tools. More specifically, very advanced materials such as armor plates and composites are notoriously difficult to machine with standard systems and methods. High-speed systems and ultra-hard tool bits are used for such material, but provide only a marginal increase in tool life and productivity. Significant improvements in the machinability of materials have been achieved by implementing advanced technologies such as laser, waterjet, and EDM cutting. However, these processes are high in capital cost, limited in application, and differ too much to be used in standard machine shops. Also, the application of these processes is limited to certain types of cuts in the materials on which they are typically used.

Ultrasonic-assisted machining was developed in the United States in the 1950's and was used for machining materials that were considered to be difficult to machine at the time. The more modern process of ultrasonic machining (UM) involves the application of high power ultrasonic vibrations to "traditional" machining processes (e.g., drilling, turning, milling) for improving overall performance in terms of faster drilling, effective drilling of hard materials, increased tool life, and increased accuracy. This is typically accomplished by using drill bits manufactured from high speed steel (HSS), carbide, cobalt, polycrystalline diamond composite, or other suitable materials affixed to a collet (e.g., shrink fit, compression, hydraulic, or mechanical) that is affixed to an ultrasonic (US) transmission line. In this context, UM is not the existing ultrasonic-based slurry drilling process (i.e., impact machining) used for cutting extremely hard materials such as glass, ceramics, quartz. Rather, this type of UM concerns methods for applying high power ultrasonics to drills, mills, reamers, taps, turning tools, and other tools that are used with modern machining systems.

Although the use of ultrasonics with modern machining systems provides significant and numerous benefits, there are certain technical challenges involved, not the least of which is the incorporation of ultrasonic energy into machining systems that were not originally designed to accommodate this type of energy output. Thus, there is an ongoing need for an ultrasonic machining module that is compatible with and that may be incorporated into existing machining systems without damaging or negatively impacting the performance of such systems.

US 2011/0222975 A1 proposes a device in accordance with the preamble of claim 1 for use in a machining system, including an ultrasonic transducer, wherein the ultrasonic transducer is adapted to receive a tool bit; a housing adapted to be both compatible with the machining system and to receive the ultrasonic transducer, wherein the housing is operative to isolate all radial and other vibrations generated by the ultrasonic transducer except the axial vibration transmitted to the tool bit; and a tool holder, wherein the tool holder and the top portion of the housing are mechanically coupled to one another.

### SUMMARY OF THE INVENTION

According to the invention, there is provided a device for use in a machining system as set out in claim 1.

Additional features and aspects of the present invention will become apparent to those of ordinary skill in the art upon reading and understanding the following detailed description of the exemplary embodiments. As will be appreciated by the skilled artisan, further embodiments of the invention are possible without departing from the scope of the invention. Accordingly, the drawings and associated descriptions are to be regarded as illustrative and not restrictive in nature.

### BRIEF DESCRIPTION OF THE DRAWINGS

The accompanying drawings, which are incorporated into and form a part of the specification, schematically illustrate one or more exemplary embodiments of the invention and, together with the general description given above and detailed description given below, serve to explain the principles of the invention, and wherein:
FIG. 1 is a side view of an ultrasonic machining module ;
FIG. 2 is a cross-sectional view of the ultrasonic machining module of FIG. 1;
FIG. 3 is a side view of an ultrasonic machining module , wherein a hydraulic collet is included as a component of the ultrasonic machining module;
FIG. 4 is a cross-sectional view of the ultrasonic machining module of FIG. 3;
FIG. 5 is a side view of an ultrasonic machining module , wherein a nut acts upon a compressible sleeve that is included as a component of the ultrasonic machining module;
FIG. 6 is a cross-sectional view of the ultrasonic machining module of FIG. 5;
FIG. 7 is a side view of an ultrasonic machining module in accordance with an exemplary embodiment of the present invention, wherein the through spindle coolant system included in the ultrasonic machining module includes an isolation adapter;
FIG. 8 is a cross-sectional view of the ultrasonic machining module of FIG. 7; and
FIG. 9 is an exploded, perspective view of the ultrasonic machining module of FIG. 7.

### DETAILED DESCRIPTION OF THE INVENTION

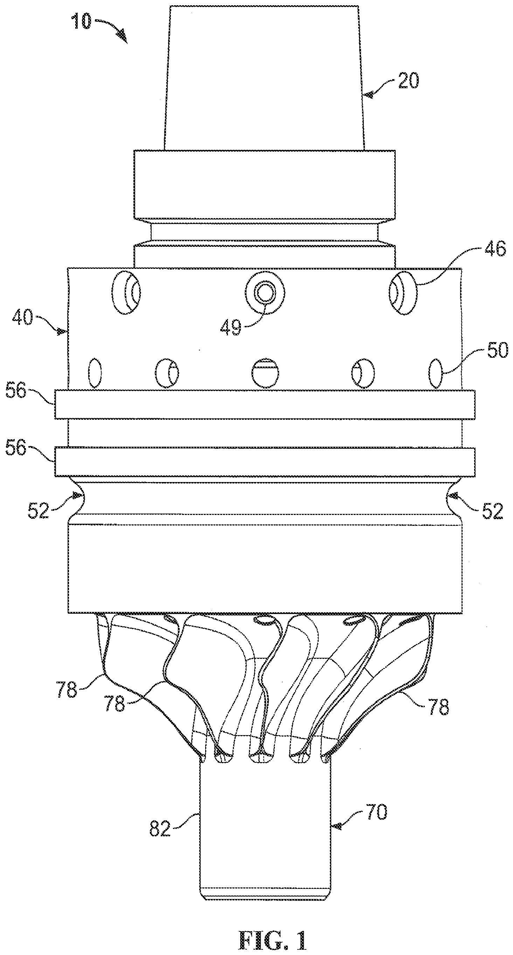

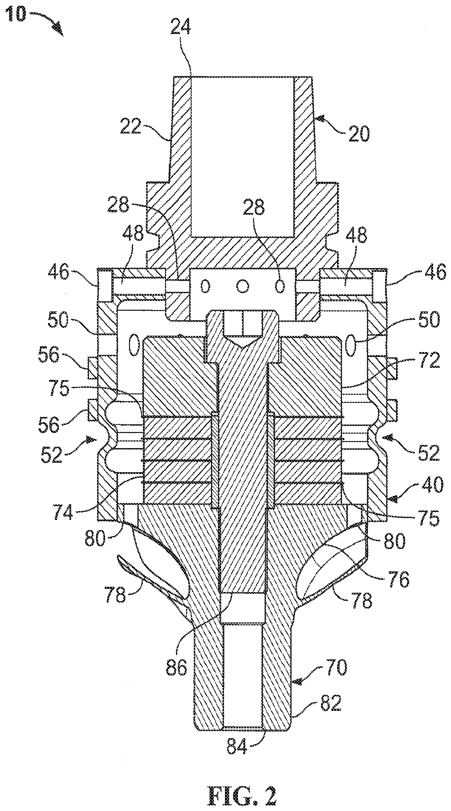

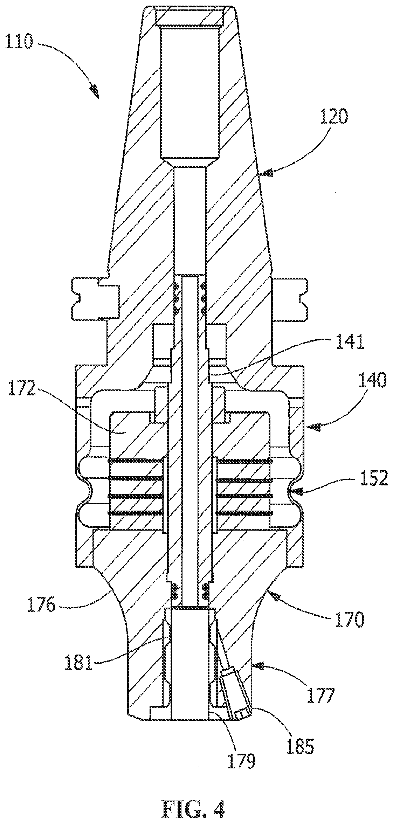

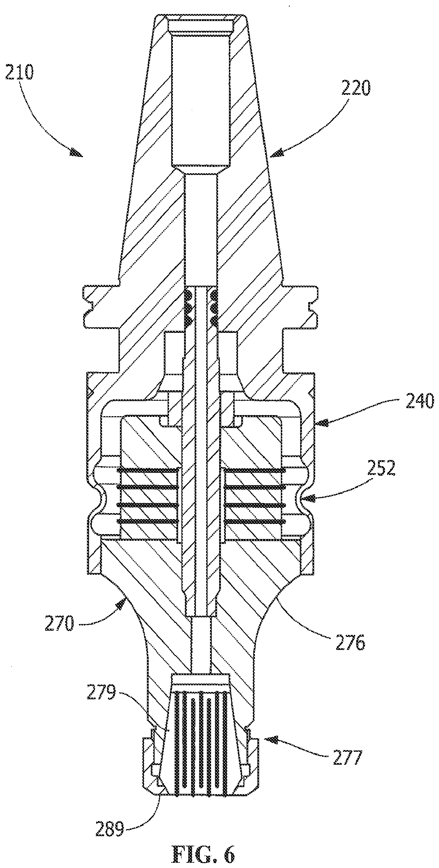

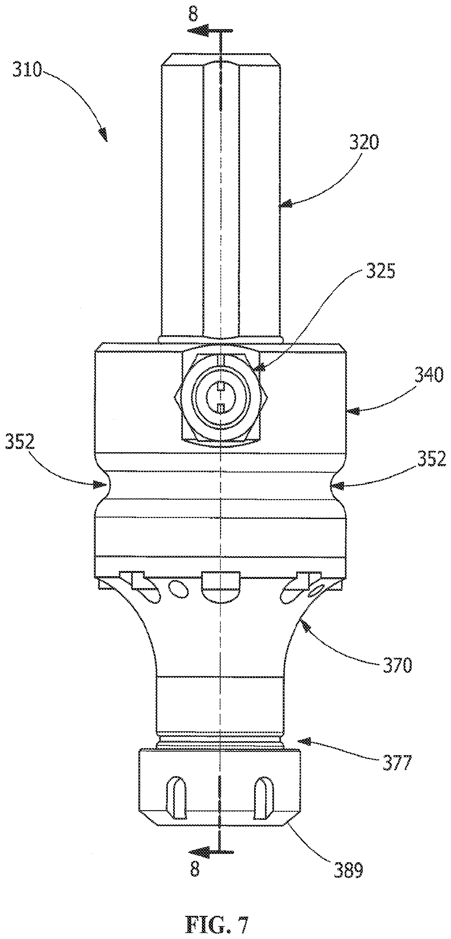

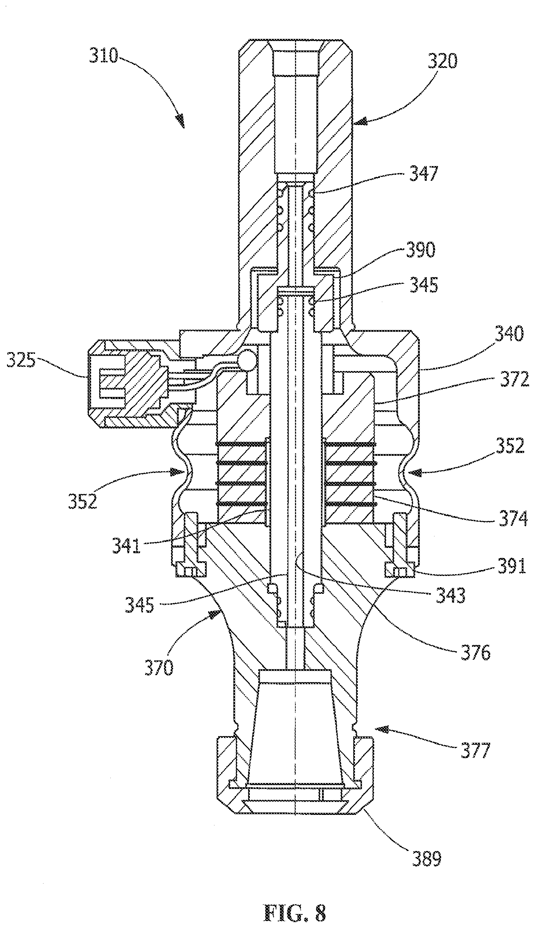

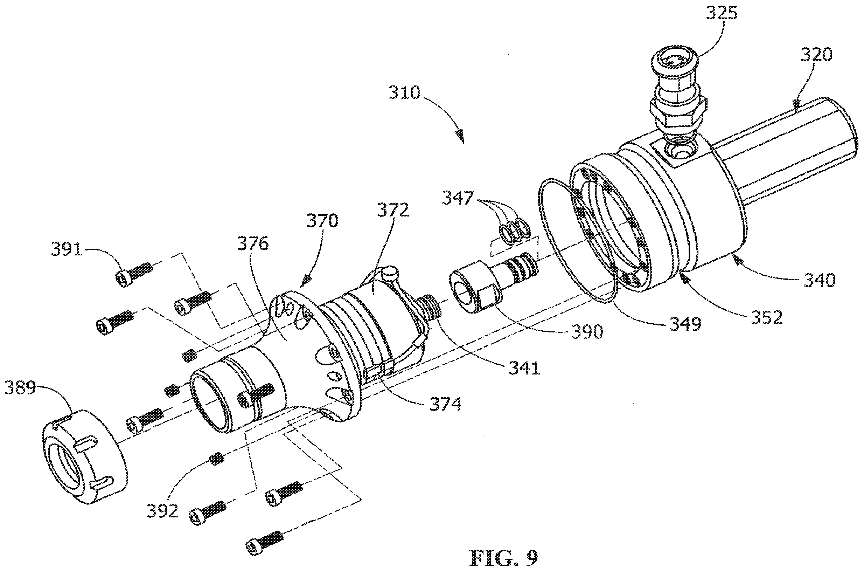

Exemplary embodiments of the present invention are now described with reference to the Figures 1-6, which show examples of devices that do not fall under the scope of the claims and that are useful for understanding the invention, and with reference to Figures 7-9 which relate to an exemplary embodiment of the claimed invention.

Although the following detailed description contains many specifics for purposes of illustration, a person of ordinary skill in the art will appreciate that many variations and alterations to the following details are within the scope of the invention. Accordingly, the following embodiments of the invention are set forth without any loss of generality to, and without imposing limitations upon, the claimed invention.

The present invention provides various ultrasonic machining modules that have been adapted for incorporation into existing commercially available machining systems that were not originally designed to accommodate such ultrasonic modules. With reference to FIGS. 1-2, there is an ultrasonic machining module for use in a machining system, wherein the ultrasonic machining module includes: (a) an ultrasonic transducer, wherein the ultrasonic transducer is adapted to receive a tool bit, and wherein the ultrasonic transducer further comprises: (i) a front mass; (ii) a back mass; (iii) a plurality of piezoelectric ceramics positioned between the front mass and back mass; (iv) at least one electrical connector; and (v) a bolt passing through the front mass, back mass, and ceramics, wherein the bolt is operative to apply compressive force to the ceramics; and (b) a vibration-isolating housing adapted to be both compatible with a machining system and to receive the ultrasonic transducer therein. The housing further includes a spring-like feature formed radially therein above the front mass, wherein the spring-like feature further includes a curved and thinned section of the housing, and wherein the curved and thinned section of the housing is operative to permit flexion in the housing for isolating all vibrations generated by the ultrasonic transducer when the device is in operation except axial vibrations transmitted to the tool bit, thereby preventing unwanted vibrations from traveling backward or upward into the machining system and potentially causing damage to the system or other problems.

With reference to FIGS. 1-2, an ultrasonic machining module 10 includes three basic components: tool holder 20, housing 40, and ultrasonic transducer assembly 70. Tool holder 20 includes upper portion 22, which further includes primary bore 24 formed therein for attaching machining module 10 to the main spindle (e.g., CAT 40, 60 or HSK) of a machining system (not shown). Lower portion 26 of tool holder 20 includes a plurality of secondary bores 28 that cooperate with similar structures in housing 40 to mechanically couple tool holder 20 to housing 40 using connectors 49 (i.e., centering bolts). In some embodiments of the present invention, tool holder 20 is shrink-fit to housing 20 in addition to or instead of being bolted thereto.

Housing 40 includes a rigid cylindrical body 42 that further includes a centrally located aperture 44 that is adapted to receive tool holder 20, and a bottom opening 54, into which ultrasonic transducer assembly 70 is inserted. Circumferential electrical contacts 56 (i.e., slip rings) are positioned on the exterior of housing 40. As will be appreciated by the skilled artisan, the use of other types of electrical contacts is possible with this invention. For example, a single contact 56 may be utilized or the contacts may extend through the spindle of the machining system, while still providing or maintaining the flow of cooling air through the spindle. The top or upper portion of housing 40 includes a plurality of apertures 46 that connect to a plurality of bores 48 that correspond to the placement of bores 28 in tool holder 20 when machining module 10 is assembled. A series of connectors 49 are inserted into bores 48 and 28 for the purpose of bolting tool holder 20 to housing 40. A plurality of air outlets 50 is formed in housing 20. As described in greater detail below, air outlets 50 cooperate with specific structures on ultrasonic transducer assembly 70 to cool machining module 10 when in use, thereby reducing or eliminating the need for any separate or external system or apparatus for cooling piezoelectric ceramics 74.

Housing 40 also includes circumferential region 52, which acts as a vibration isolating spring, and as such is characterized as a "spring-like structure". In the exemplary example, region 52 includes a contoured and thinned section of the material from which housing 40 is manufactured. When machining module 10 is in use, region 52 permits a degree of flexion in housing 40, thereby absorbing and/or isolating acoustic energy generated by ultrasonic transducer assembly 70 and preventing unwanted vibration from traveling backward or upward into the spindle or other mechanical components of the machining system. Axial vibration generated by ultrasonic transducer assembly 70 is not diminished by region 52; therefore, torque is still delivered to the tool bit or other item that is attached to front mass 76 and that is being used to machine a workpiece. Within the context of this invention, the term "tool bit" should be understood to mean drill bit or any other item that is attached to front mass 76. Essentially, region 52 is operative to absorb and/or isolate most or all vibrational modes except the axial vibrations directed toward the workpiece.

Ultrasonic transducer assembly 70 includes back mass 72, front mass 76, and a plurality of piezoelectric ceramics 74 positioned between these two structures. A plurality of electrodes 75 are sandwiched between piezoelectric ceramics 74, and bolt 86 passes through back mass 72, ceramics 74, electrodes 75 and a portion of front mass 76. When tightened, bolt 86 is operative to apply compressive force to piezoelectric ceramics 74. Although not shown in the Figures, a series of electrical lead wires are typically attached to at least one of the electrodes 75. These wires exit the interior of housing 40 either through housing 40 or through tool holder 20 where they then connect to circumferential electrical contacts 56. Brush contacts or other types of electrical contacts may be used to provide electricity to machining module 10. Transducer assembly 70 typically operates at power levels ranging from 1 kW-5 kW and amplitudes ranging from 25 µm to 150 µm.

In the exemplary example of ultrasonic machining module 10 shown in FIGS. 1-2, ultrasonic transducer assembly 70 further includes a plurality of cooling members, fins or vanes 78 that are located circumferentially around front mass 76 just beneath a plurality of air inlets 80 that are also formed in front mass 76. When ultrasonic machining module 10 rotates, vanes 78, which simulate a compressor wheel, are operative to draw air upward and through air inlets 80. Air then flows through the interior of housing 40 across ceramics 74 for cooling purposes, and exits housing 40 though air outlets 50. As shown in the Figures, the front or bottom area of front mass 76 includes a tapered collet 82 that further includes bore 84, which is adapted to receive a drill bit, milling tool, or other item. As will be appreciated by the skilled artisan, a drill bit or other item (not shown) may be attached to collet 82 using the process known as shrink-fitting. By heating the mass around bore 84 uniformly, it is possible to significantly expand the diameter of the bore. The shaft of a drill bit or other item is then inserted into the expanded bore. Upon cooling, the mass around the bore shrinks back to its original diameter and frictional forces create a highly effective joint. In an exemplary embodiment, the bottom edge of housing 40 is attached to the top portion of front mass 76 using a shrink-fit process for facilitating removal of case 40 for repairing ultrasonic machining module 10. As will be appreciated by the skilled artisan, other means of attaching tooling items to front mass 76 and/or attaching housing 40 to transducer assembly 70 are possible and are compatible with the present invention.

Some or all of the metal components of ultrasonic machining module 10 are typically manufactured from A2 tool steel. Alternately, D2, SS, 4140, and/or 350-M tool steel may be used. Regardless of the material used, front mass 76 and back mass 72 may both be manufactured from the same material as a means for reducing amplitude. In general terms, mixing of the mass of these components adjusts amplitude. In the exemplary example shown in FIGS. 1-2, total module length is about 7.5 inches (19.1 cm). However, the present invention is scalable and miniaturized variants of ultrasonic machining module 10 are compatible with medical and surgical systems and devices, among other applications.

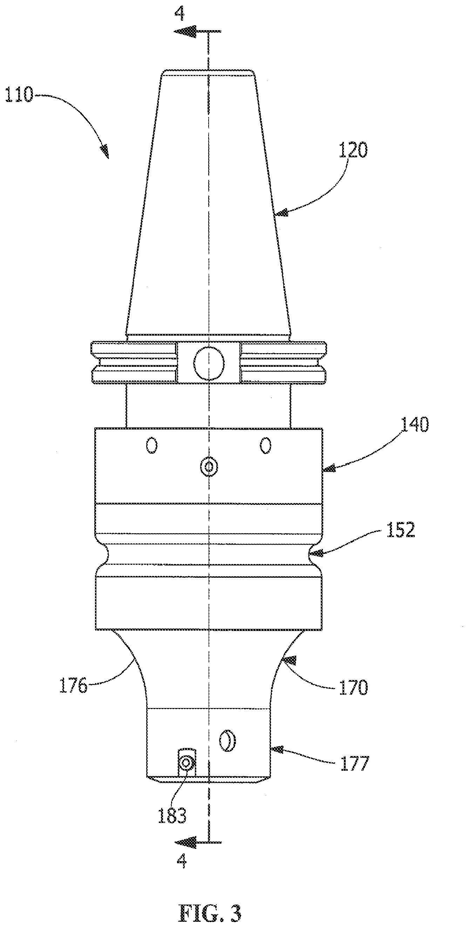

FIG. 3-4 provide side and cross-sectional views respectively of ultrasonic machining module 110 in accordance with a second exemplary example,
wherein hydraulic collet 177 is included as a component of ultrasonic machining module 110. In this example, ultrasonic machining module 110 includes tool holder 120, housing 140, compression stud 141, vibration isolating region 152, ultrasonic transducer assembly 170, back mass 172, front mass (collet body) 176, hydraulic collet 177, sleeve 179, pressurized chamber 181, fill ports 183, hydraulic plungers 185, and threaded region 187. Unlike conventional hydraulic collet systems, the physical body of hydraulic collet 177 is configured to be an acoustical device. Accordingly, the front mass or collet body 176 is tuned to λ/4*.* Within collet body 176, there is a secondary sleeve 179 which may be attached using threaded surfaces or brazing processes. A preferred process includes brazing sleeve 179 within body 176 to couple these components for effectively transmitting the acoustic wave. In order for ultrasonic machining module 110 to resonate properly, various design aspects are relevant. First, front mass (collet body) 176 is sufficiently rigid to support the internal pressure generated by hydraulic plungers 185 so that all deformation is produced within sleeve 179. Second, oil or grease is used as the pressurized media and there is less than 10% air within pressurized chamber 181. Third, there is a minimum of three pressure/fill ports 183 located symmetrically around the body of front mass (collet body) 176. This is one of the most important aspects, as this design feature can change the mass around the circumference of front mass (collet body) 176, which will then drive non-uniform displacement. For example, if there is only one fill port 183, there is a reduction in mass in pressurized chamber 181, thus reducing the amount of displacement compared to surrounding areas. This in turn introduces a bending motion which is then transmitted to the tip of a tool mounted within ultrasonic machining module 110. This has the same effect if only two fill ports 183 are used; therefore three fill ports 183 are important for properly pressuring or filling pressured chamber 181 with media to create uniform displacement. If a threaded sleeve 179 is used in this example, sleeve geometry is typically symmetrical and any additional fill ports 183 are also symmetrical in their placement. The threaded sleeve example utilizes a floating sleeve 179 which is then shifted by a secondary nut (not shown in Figures) which is used to push sleeve 179 onto front mass (collet body) 176. This in turn creates a volumetric change, thereby generating pressure on the surrounding sleeve 179 acting as a bore body. Fourth, a minimum pressure of 250psi (17.2 bar) is generated in order to rigidly couple a cutting tool through deformation of the wall of sleeve 179. This effectively transmits the required torque and exerts the necessary machining forces. Furthermore, coupling drives an attached tool in resonance with ultrasonic transducer assembly 110.

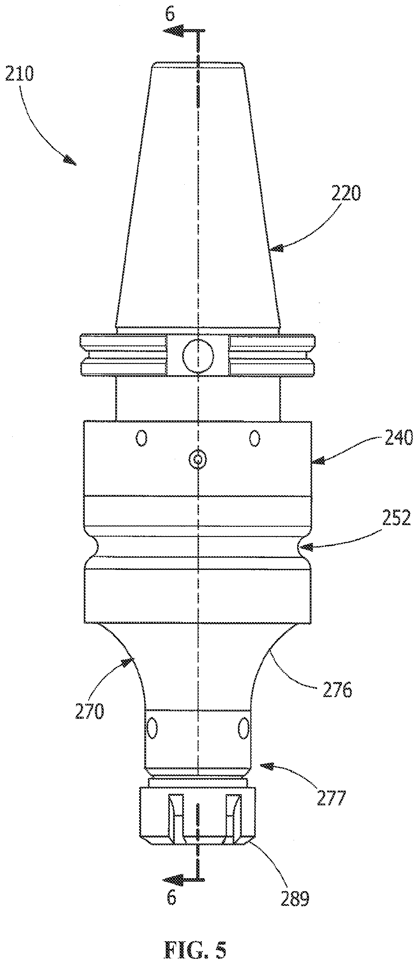

FIGS. 5-6 provide side and cross-sectional views respectively of ultrasonic machining module 210 in accordance with a third exemplary example,
wherein a compressible sleeve 279 is included as a component of ultrasonic machining module 210. In this example, ultrasonic machining module 210 includes tool holder 220, housing 240, compression stud 241, vibration isolating region 252, ultrasonic transducer assembly 270, back mass 272, front mass (collet body) 276, compressible sleeve 279, and threaded body (nut) 289. This example provides an additional tool attachment option by using compressible sleeve 279, which is integrated with transducer front mass (collet body) 276. Compressible sleeve 279, which is flexible, is mechanically compressed by threaded body or nut 289, which reduces the internal diameter of compressible sleeve 279 for effectively holding the shank of a machining tool disposed therein and effectively coupling with front mass (collet body) 276. With regard to this example: (i) compressible sleeve 279 has no more than 45% of its mass reduced by specific geometry that allows compressible sleeve 279 to change its diameter under compressive force; (ii) the angle used to compress compressible sleeve 279 is at least 1° but no more than 20°; (iii) the angle of compressible sleeve 279 and the angled surface within tuned λ/4 front mass/collet maintains line contact throughout the entire length of engagement (ring or other contact will not appropriately couple the components to transfer acoustic waves); (iv) the body compressing compressible sleeve 279 can be a nut, arrangement of screws, Dzus fastener, or cam (a mechanic clamping action is utilized); and (v) collet 277 typically accommodates tool shank diameters ranging from 1/16" (1.59mm) to 1.5" (38.1mm) although the use of other diameters is possible.

FIGS. 7-9 provide side, cross-sectional, and perspective views respectively of ultrasonic machining module 310 in accordance with an exemplary embodiment of the present invention, that includes through-spindle coolant features as components of ultrasonic machining module 310. In this embodiment, the through spindle coolant features operate while under ultrasonic excitation and provide passages and sealing for high pressure coolant to be delivered to a machining tool attached to ultrasonic machining module 310 and/or to a target substrate. In this embodiment, ultrasonic machining module 310 includes tool holder 320, electrical connector 325, housing 340, compression stud 341, vibration isolating region 352, ultrasonic transducer assembly 370, collet 377, nut 389, and isolation adapter 390.

As best shown in FIGS. 7-8, the conventional manner of employing a high-strength bolt or compression stud for applying appropriate preload forces to transducer ceramics 374 has been modified such that compression stud 341 now functions as a tuned component of ultrasonic transducer assembly 370. Conventional compression studs/bolts are attached to the nodal region of a transducer front mass and for application of compressive forces against a transducer back mass and typically there is no need for an extension of the compression stud. In this embodiment, compression stud 341 extends much further up the system and into the cavity of tool holder 320, (which may be CAT, HSK, BT, etc.) so that seals can be incorporated into the ultrasonic machining module 310 for sealing off high pressure coolants being introduced to ultrasonic transducer assembly 370 due to transmission of electrical current through the module. In this configuration, compressive stud 341 is designed to act as a tuned element based on the total system frequency and is driven in a pure longitudinal mode because a bending mode would create interference with the side walls of tool holder 320 and create a potential leak path for coolant fluid. In this embodiment, fluid channel 343, which passes through compression stud 341, is not larger than one-quarter inch (6.35mm) operating at up to 1000 psi (64.95 bar) in order to suppress cavitation generated by ultrasonic transducer assembly 370, which may lead to cavitation erosion. Both ends of compression stud 341 are adapted to receive seals that protect the electrical components of ultrasonic transducer assembly 370.

An important aspect of this embodiment is the integration of isolation adapter 390 onto the rear or uppermost end of compression stud 341. As with other examples, ultrasonic transducer assembly 370 utilizes λ/2 (half wave length) construction. Therefore, the nodal region of ultrasonic transducer assembly 370 resides at the upper most face of front mass 376, wherein the driving elements are affixed and set in compression. This, in turn, locates the anti-nodes at the furthermost end of ultrasonic transducer assembly 370. This is specifically located at the end of front mass 376 (position of threads) and the upper most end of compression stud 341. Accordingly, because the uppermost end of compression stud 341 is part of the anti-node of ultrasonic transducer assembly 370, this strucutre is also set into resonance and has the highest degree of displacement. For this reason, the length of compression stud 341 is an important design aspect for faciliating fluid passage or flow through a body action in tension, while delivering acceptable stress levels of 4-8 ksi (27.58MPa to 55.16MPa) to the driving elements of ultrasonic machining module 310. Variations in the length of compression stud 341 directly impacts resonant frequency and displacement at both anti-nodes.

Just as the opposing anti-node (tool attachment location) on ultrasonic transducer assembly 370 is affected by increases/decreases in mass with respect to resonant frequency, the uppermost end of compression stud 341 is also affected by mass changes, but can also be put into secondary modes induced by excessive side loads or constraints induced by alignment issues between the uppermost end of compression stud 341 and tool holder 320. This possibility is elimated through the use of elastomeric seals or O-rings 347, which allows isloation adapter 390 to "float" within the tool holder 320 component of housing 340. For preventing leakage of coolant fluid, compression stud 341 and isolation adapter 390 are sealed within ultrasonic transducer assembly 370 using a series of O-rings 345 and 347, respectively, while O-ring 349 seals the upper portion of ultrasonic transducer assembly 370 to the lower portion thereof. A series of attachment fasteners and alignment members 391 and 392 respectively, hold the main (upper and lower) components of ultrasonic transducer assembly 370 together. Electricity is supplied to ultrasonic transducer assembly 370 though electrical connector 325 and nut 389 provides compressive force for mounting a machining tool in collet 377. Other tool attachment systems and devices are compatible with this embodiment.

While the present invention has been illustrated by the description of exemplary embodiments thereof, and while the embodiments have been described in certain detail, there is no intention to restrict or in any way limit the scope of the appended claims to such detail.

Additional advantages and modifications will readily appear to those skilled in the art. Therefore, the invention in its broader aspects is not limited to any of the specific details, representative devices and methods, and/or illustrative examples shown and described. Accordingly, departures may be made from such details without departing from the scope of the appended claims.

## Claims

1. A device for use in a machining system, comprising:
(a) an ultrasonic transducer (370) having a known acoustic frequency, wherein the ultrasonic transducer (370) further includes:
(i) a front mass (376) ;
(ii) a back mass (372);
(iii) a plurality of piezoelectric ceramics (374) positioned between the front mass (376) and the back mass (372);
(iv) at least one source of electricity connected to the piezoelectric ceramics (374);
(v) a compression member (341) passing through the front mass (376), back mass (372), and ceramics, wherein the compression member (341) is operative to apply compressive force to the ceramics (374); and
(vi) a collet (377) adapted to receive a machining tool;
(b) a vibration-isolating housing (340) adapted to be both compatible with a machining system and to receive the ultrasonic transducer (370) therein, wherein the housing further includes at least one modification for isolating all vibrations generated by the ultrasonic transducer (370) when the device is in operation except axial vibrations transmitted to the machining tool, thereby preventing unwanted vibration from traveling backward or upward into the machining system; and **characterised by** further comprising:
(c) a system for delivering coolant fluid to the machining tool, wherein the fluid delivery system is tuned to the frequency of the ultrasonic transducer (370) and further includes:
(a) a fluid channel (343) formed lengthwise in the compression member (341);
(b) an isolation adapter (390) positioned on the uppermost end of the compression member (341) and aligned therewith, wherein the isolation adapter (390) further includes a fluid channel formed lengthwise therein; and
(c) a plurality of O-rings (347) positioned circumferentially around the isolation adapter (390);
wherein:
the device is built using half wave length construction;
the nodal region of the ultrasonic transducer assembly (370) resides at the upper most face of the front mass (376) and the anti-nodes are located at the end of the front mass (376) and the upper most end of the compression member (341); and the plurality of O-rings allow the isolation adapter (390) to prevent the uppermost end of the compression member (341) from being put into secondary resonance modes.

2. The device of claim 1, wherein the collet (377) is tuned to the acoustic frequency of the ultrasonic transducer (370) and further includes:
(a) a chamber formed therein;
(b) a sleeve mounted with the chamber, wherein the sleeve is adapted to receive the machining tool;
(c) at least one port for introducing fluid into the chamber around the sleeve; and
(d) at least one hydraulic plunger for pressurizing the chamber around the sleeve and compressing the sleeve around the machining tool for securing the machining tool therein.

3. The device of claim 1, wherein the collet (377) is tuned to the acoustic frequency of the ultrasonic transducer (370) and further includes:
(a) a chamber formed therein;
(b) a compressible sleeve mounted with the chamber, wherein the compressible sleeve is adapted to receive the machining tool; and
(c) at least one compression member for applying compressive force to the compressible sleeve for securing the machining tool therein.

4. The device of claims 1 or 2, wherein the at least one modification for isolating all vibrations generated by the ultrasonic transducer (370) further includes a spring-like feature formed radially in the housing (340) above the front mass (376), wherein the spring-like feature further includes a curved and thinned section of the housing, and wherein the curved and thinned section of the housing (340) is operative to permit flexion in the housing (340) for isolating all vibrations generated by the ultrasonic transducer (370) when the device is in operation except axial vibrations transmitted to the machining tool.

5. The device of claim 1, further comprising a tool holder (320), wherein the tool holder (320) and the top portion of the housing (340) are mechanically coupled to one another or are integrated with one another.

6. The device of claim 2, further comprising a tool holder (320), wherein the tool holder (320) and the top portion of the housing (340) are mechanically coupled to one another or are integrated with one another.

7. The device of claim 2, wherein the external surface of the housing (340) further includes at least one electrical contact mounted thereon.

8. The device of claim 3, wherein the at least one modification for isolating all vibrations generated by the ultrasonic transducer (370) further includes a spring-like feature formed radially in the housing (340) above the front mass (376), wherein the spring-like feature further includes a curved and thinned section of the housing (340), and wherein the curved and thinned section of the housing (340) is operative to permit flexion in the housing (340) for isolating all vibrations generated by the ultrasonic transducer (370) when the device is in operation except axial vibrations transmitted to the machining tool.

9. The device of claim 8, further comprising a tool holder (320), wherein the tool holder (320) and the top portion of the housing (340) are mechanically coupled to one another or are integrated with one another.

10. The device of claim 9, wherein the ultrasonic transducer (370) further includes at least one electrical connector.

## Patentansprüche

1. Vorrichtung zur Verwendung in einer Bearbeitungsanlage, wobei die Vorrichtung Folgendes umfasst:
(a) einen Ultraschallwandler (370), der eine bekannte akustische Frequenz aufweist, wobei der Ultraschallwandler (370) ferner Folgendes umfasst:
(i) eine vordere Masse (376);
(ii) eine hintere Masse (372);
(iii) eine Vielzahl von piezoelektrischen Keramikelementen (374), die zwischen der vorderen Masse (376) und der hinteren Masse (372) angeordnet sind;
(iv) zumindest eine Elektrizitätsquelle, die mit den piezoelektrischen Keramikelementen (374) verbunden ist;
(v) ein Kompressionselement (341), das durch die vordere Masse (376), die hintere Masse (372) und die Keramikelemente verläuft, wobei das Kompressionselement (341) betreibbar ist, um eine Druckkraft auf die Keramikelemente (374) auszuüben; und
(vi) ein Spannfutter (377), das geeignet ist, um ein Bearbeitungswerkzeug aufzunehmen;
(b) ein schwingungsisolierendes Gehäuse (340), das geeignet ist, um sowohl mit einer Bearbeitungsanlage kompatibel zu sein als auch den Ultraschallwandler (370) in dieser aufzunehmen, wobei das Gehäuse ferner zumindest eine Modifikation zur Isolierung aller durch den Ultraschallwandler (370) erzeugten Schwingungen umfasst, wenn die Vorrichtung in Betrieb ist, mit Ausnahme von axialen Schwingungen, die zu dem Bearbeitungswerkzeug übertragen werden, wodurch verhindert wird, dass unerwünschte Schwingungen sich rückwärts oder aufwärts in die Bearbeitungsanlage bewegen; und **dadurch gekennzeichnet, dass** sie ferner Folgendes umfasst:
(c) ein System zur Zufuhr eines Kühlmittelfluids zu dem Bearbeitungswerkzeug, wobei das Fluidzufuhrsystem auf die Frequenz des Ultraschallwandlers (370) abgestimmt ist und ferner Folgendes umfasst:
(a) einen Fluidkanal (343), der in Längsrichtung in dem Kompressionselement (341) ausgebildet ist;
(b) einen Isolierungsadapter (390), der auf dem obersten Ende des Kompressionselements (341) angeordnet und in Bezug auf dieses fluchtend ausgerichtet ist, wobei der Isolierungsadapter (390) ferner einen Fluidkanal umfasst, der in Längsrichtung darin ausgebildet ist; und
(c) eine Vielzahl von O-Ringen (347), die in Umfangsrichtung um den Isolierungsadapter (390) angeordnet ist;
wobei:
die Vorrichtung unter Anwendung einer Halbwellenlängenkonstruktion gebaut ist;
der Knotenbereich der Ultraschallwandleranordnung (370) auf der obersten Oberfläche der vorderen Masse (376) ausgebildet ist und die Antiknoten am Ende der vorderen Masse (376) und dem obersten Ende des Kompressionselements (341) angeordnet sind; und die Vielzahl von O-Ringen ermöglicht, dass der Isolierungsadapter (390) verhindert, dass das oberste Ende des Kompressionselements (341) in Sekundärresonanzmoden versetzt zu werden.

2. Vorrichtung nach Anspruch 1, wobei das Spannfutter (377) auf die akustische Frequenz des Ultraschallwandlers (370) abgestimmt ist und ferner Folgendes umfasst:
(a) eine in diesem ausgebildete Kammer;
(b) eine an der Kammer angebrachte Hülse, wobei die Hülse geeignet ist, um das Bearbeitungswerkzeug aufzunehmen;
(c) zumindest eine Öffnung zum Einbringen von Fluid in die Kammer um die Hülse; und
(d) zumindest einen hydraulischen Kolben, um die Kammer um die Hülse unter Druck zu setzen und die Hülse um das Bearbeitungswerkzeug herum zusammenzudrücken, um das Bearbeitungswerkzeug in diesem zu befestigen.

3. Vorrichtung nach Anspruch 1, wobei das Spannfutter (377) auf die akustische Frequenz des Ultraschallwandlers (370) abgestimmt ist und ferner Folgendes umfasst:
(a) eine in diesem ausgebildete Kammer;
(b) eine komprimierbare Hülse, die an der Kammer angebracht ist, wobei die komprimierbare Hülse geeignet ist, um das Bearbeitungswerkzeug aufzunehmen; und
(c) zumindest ein Kompressionselement zum Ausüben einer Druckkraft auf die komprimierbare Hülse, um das Bearbeitungswerkzeug in diesem zu befestigen.

4. Vorrichtung nach Anspruch 1 oder 2, wobei die zumindest eine Modifikation zur Isolierung aller Schwingungen, die durch den Ultraschallwandler (370) erzeugt werden, ferner Folgendes umfasst: ein federähnliches Element, das radial in dem Gehäuse (340) oberhalb der vorderen Masse (376) ausgebildet ist, wobei das federähnliche Element ferner einen gekrümmten und verdünnten Abschnitt des Gehäuses umfasst und wobei der gekrümmte und verdünnte Abschnitt des Gehäuses (340) betreibbar ist, um ein Biegen des Gehäuses (340) zur Isolierung aller Schwingungen zu ermöglichen, die durch den Ultraschallwandler (370) erzeugt werden, wenn die Vorrichtung in Betrieb ist, mit Ausnahme von an das Bearbeitungswerkzeug übertragenen axialen Schwingungen.

5. Vorrichtung nach Anspruch 1, die ferner einen Werkzeughalter (320) umfasst, wobei der Werkzeughalter (320) und der oberste Abschnitt des Gehäuses (340) mechanisch miteinander verbunden sind oder einstückig miteinander ausgebildet sind.

6. Vorrichtung nach Anspruch 2, die ferner einen Werkzeughalter (320) umfasst, wobei der Werkzeughalter (320) und der obere Abschnitt des Gehäuses (340) mechanisch miteinander verbunden sind oder einstückig miteinander ausgebildet sind.

7. Vorrichtung nach Anspruch 2, wobei die Außenoberfläche des Gehäuses (340) ferner zumindest einen an diesem angebrachten elektrischen Kontakt umfasst.

8. Vorrichtung nach Anspruch 3, wobei die zumindest eine Modifikation zur Isolierung aller durch den Ultraschallwandler (370) erzeugten Schwingungen ferner ein federähnliches Element umfasst, das radial in dem Gehäuse (340) oberhalb der vorderen Masse (376) ausgebildet ist, wobei das federähnliche Element ferner einen gekrümmten und verdünnten Abschnitt des Gehäuses (340) umfasst und wobei der gekrümmte und verdünnte Abschnitt des Gehäuses (340) betreibbar ist, um ein Biegen des Gehäuses (340) zur Isolierung aller Schwingungen zu ermöglichen, die durch den Ultraschallwandler (370) erzeugt werden, wenn die Vorrichtung in Betrieb ist, mit Ausnahme von an das Bearbeitungswerkzeug übertragenen axialen Schwingungen

9. Vorrichtung nach Anspruch 8, die ferner einen Werkzeughalter (320) umfasst, wobei der Werkzeughalter (320) und der obere Abschnitt des Gehäuses (340) mechanisch miteinander verbunden sind oder einstückig miteinander ausgebildet sind.

10. Vorrichtung nach Anspruch 9, wobei der Ultraschallwandler (370) ferner zumindest einen elektrischen Steckverbinder umfasst.

## Revendications

1. Dispositif pour une utilisation dans un système d'usinage, comprenant :
(a) un transducteur à ultrasons (370) ayant une fréquence acoustique connue, dans lequel le transducteur à ultrasons (370) comprend en outre :
(i) une masse avant (376) ;
(ii) une masse arrière (372) ;
(iii) une pluralité de céramiques piézoélectriques (374) positionnées entre la masse avant (376) et la masse arrière (372) ;
(iv) au moins une source d'électricité connectée aux céramiques piézoélectriques (374) ;
(v) un élément de compression (341) passant à travers la masse avant (376), la masse arrière (372) et les céramiques, dans lequel l'élément de compression (341) est opérationnel pour appliquer une force de compression aux céramiques (374) ; et
(vi) une pince de serrage (377) adaptée pour recevoir un outil d'usinage ;
(b) un boîtier (340) isolant des vibrations adapté pour être à la fois compatible avec un système d'usinage et pour recevoir le transducteur à ultrasons (370) dans celui-ci, dans lequel le boîtier comprend en outre au moins une modification pour isoler toutes les vibrations produites par le transducteur à ultrasons (370) lorsque le dispositif est en fonctionnement, à l'exception de vibrations axiales transmises à l'outil d'usinage, en empêchant ainsi des vibrations non voulues de se déplacer vers l'arrière ou vers le haut dans le système d'usinage ; et **caractérisé en ce qu'**il comprend en outre :
(c) un système pour distribuer un fluide de refroidissement à l'outil d'usinage, dans lequel le système de distribution de fluide est accordé à la fréquence du transducteur à ultrasons (370) et comprend en outre :
(a) un canal de fluide (343) formé dans le sens de la longueur dans l'élément de compression (341) ;
(b) un adaptateur d'isolation (390) positionné sur l'extrémité la plus supérieure de l'élément de compression (341) et aligné avec celui-ci, dans lequel l'adaptateur d'isolation (390) comprend en outre dans celui-ci un canal de fluide formé dans le sens de la longueur ; et
(c) une pluralité de joints toriques (347) positionnés circonférentiellement autour de l'adaptateur d'isolation (390) ;
dans lequel :
le dispositif est construit à l'aide d'une construction à demi-longueur d'onde ;
la région nodale de l'ensemble transducteur à ultrasons (370) réside au niveau de la face la plus supérieure de la masse avant (376) et les anti-nœuds sont situés au niveau de l'extrémité de la masse avant (376) et de l'extrémité la plus supérieure de l'élément de compression (341) ; et
la pluralité de joints toriques permet à l'adaptateur d'isolation (390) d'empêcher l'extrémité la plus supérieure de l'élément de compression (341) d'être mise en modes de résonance secondaire.

2. Dispositif selon la revendication 1, dans lequel la pince de serrage (377) est accordée sur la fréquence acoustique du transducteur à ultrasons (370) et comprend en outre :
(a) une chambre formée dans celui-ci ;
(b) un manchon monté avec la chambre, dans lequel le manchon est adapté pour recevoir l'outil d'usinage ;
(c) au moins un orifice pour introduire du fluide jusque dans la chambre autour du manchon ; et
(d) au moins un piston hydraulique pour pressuriser la chambre autour du manchon et comprimer le manchon autour de l'outil d'usinage pour fixer l'outil d'usinage dans celui-ci.

3. Dispositif selon la revendication 1, dans lequel la pince de serrage (377) est accordée sur la fréquence acoustique du transducteur à ultrasons (370) et comprend en outre :
(a) une chambre formée dans celui-ci ;
(b) un manchon compressible monté avec la chambre, dans lequel le manchon compressible est adapté pour recevoir l'outil d'usinage ; et
(c) au moins un élément de compression pour appliquer une force de compression au manchon compressible pour fixer l'outil d'usinage dans celui-ci.

4. Dispositif selon la revendication 1 ou 2, dans lequel la au moins une modification pour isoler toutes les vibrations produites par le transducteur à ultrasons (370) comprend en outre une caractéristique de type ressort formée radialement dans le boîtier (340) au-dessus de la masse avant (376), dans lequel la caractéristique de type ressort comprend en outre une section incurvée et amincie du boîtier, et dans lequel la section incurvée et amincie du boîtier (340) est opérationnelle pour permettre une flexion dans le boîtier (340) pour isoler toutes les vibrations produites par le transducteur à ultrasons (370) lorsque le dispositif est en fonctionnement à l'exception de vibrations axiales transmises à l'outil d'usinage.

5. Dispositif selon la revendication 1, comprenant en outre un porte-outil (320), dans lequel le porte-outil (320) et la partie supérieure du boîtier (340) sont couplés mécaniquement l'un à l'autre ou sont intégrés l'un à l'autre.

6. Dispositif selon la revendication 2, comprenant en outre un porte-outil (320), dans lequel le porte-outil (320) et la partie supérieure du boîtier (340) sont couplés mécaniquement l'un à l'autre ou sont intégrés l'un à l'autre.

7. Dispositif selon la revendication 2, dans lequel la surface externe du boîtier (340) comprend en outre au moins un contact électrique monté sur celle-ci.

8. Dispositif selon la revendication 3, dans lequel la au moins une modification pour isoler toutes les vibrations produites par le transducteur à ultrasons (370) comprend en outre une caractéristique de type ressort formée radialement dans le boîtier (340) au-dessus de la masse avant (376), dans lequel la caractéristique de type ressort comprend en outre une section incurvée et amincie du boîtier (340), et dans lequel la section incurvée et amincie du boîtier (340) est opérationnelle pour permettre une flexion dans le boîtier (340) pour isoler toutes les vibrations générées par le transducteur à ultrasons (370) lorsque le dispositif est en fonctionnement, à l'exception de vibrations axiales transmises à l'outil d'usinage.

9. Dispositif selon la revendication 8, comprenant en outre un porte-outil (320), dans lequel le porte-outil (320) et la partie supérieure du boîtier (340) sont couplés mécaniquement l'un à l'autre ou sont intégrés l'un à l'autre.

10. Dispositif selon la revendication 9, dans lequel le transducteur à ultrasons (370) comprend en outre au moins un connecteur électrique.
